# EUROPÄISCHE PATENTSCHRIFT

(11) **EP 2 885 095 B1**
(45) Veröffentlichungstag und Bekanntmachung des Hinweises auf die Patenterteilung: **25.05.2016**
(21) Anmeldenummer: 14724049.3
(22) Anmeldetag: 05.05.2014
(51) Int. Cl.: B23B 31/30, B23B 31/34, B23Q 1/28, B23Q 1/32, B23Q 1/54, B23Q 1/76, B23Q 3/08

(54) **HYDROSTATISCHE SPANNVORRICHTUNG**
HYDROSTATIC CLAMPING DEVICE
DISPOSITIF DE SERRAGE HYDROSTATIQUE

(30) Priorität: 06.05.2013 DE 102013104636
(43) Veröffentlichungstag der Anmeldung: 24.06.2015
(73) Patentinhaber: ISOG Technology GmbH & Co. KG, 82362 Weilheim (DE)
(72) Erfinder: STRASSER, Günther, 82409 Wildsteig (DE)
(74) Vertreter: Jöstingmeier, Martin
(86) Internationale Anmeldenummer: PCT/EP2014/059077
(87) Internationale Veröffentlichungsnummer: WO 2014/180770

(56) Entgegenhaltungen:
- WO-A1-2008/054294
- DE-A1- 3 322 007
- DE-A1- 19 924 309
- DE-C- 739 348
- US-A- 3 486 776
- US-A- 4 093 052
- US-A1- 2013 105 255

## Beschreibung

### Technisches Gebiet

Die Erfindung betrifft eine Spannvorrichtung insbesondere zum Einstellen und positionsgenauen Fixieren einer Lünette zur Abstützung zu bearbeitender Werkstücke.

### Stand der Technik

Die Präzisionsanforderungen an Bohrer und Fräser werden zunehmend höher. Daher werden bei der Bearbeitung dieser Werkzeuge in sogenannten Werkzeugschleifmaschinen die zu bearbeitenden Bohrer und Fräser nicht nur in ein Spannfutter eingespannt, sondern meist zusätzlich durch zumindest eine Lünette abgestützt um ein seitliches Auswandern der Werkstücke bei der Bearbeitung zu vermeiden. Im einfachsten Fall ist die Lünette ein Prisma mit einer Führungsnut, die an das Werkstück angelegt wird und in dieser Position zuverlässig fixiert werden muss. Meist wird das Werkstück auch gegen ein Auswandern aus der Führungsnut durch ein entsprechendes Gegenlager gesichert. Eine entsprechende Lünette ist beispielsweise aus der Gebrauchsmusterschrift DE 89 15 435 U1 bekannt. Oft ist an dem Prisma ein Befestigungszapfen der in einer Linearführung durch eine orthogonal zur Zapfenachse auf den Befestigungszapfen wirkende Schraube festgelegt werden kann.

Zum Einspannen von Werkstücken bei deren drehender Bearbeitung sind hydrostatische Spannfutter bekannt. Beispielsweise beschreibt die DE 199 24 309 ein hydrostatisches Spannfutter für Werkstücke mit einem zylindrischen Schaft. Der Werkstückhalter hat einen hohlzylindrischen Träger in dem polymere Ringe angeordnet sind. Auf der dem Träger abgewandten Seite der polymeren Ringe sitzt eine geschlitzte Hülse die das Werkstück aufnimmt. Die polymeren Ringe können mit einem Fluid beaufschlagt werden, so dass sich der Durchmesser der Hülse um wenigstens 2,54mm reduziert wobei das Werkstück in der Hülse eingespannt wird. In ähnlicher Weise funktioniert ein aus dem US-Patent 5,516,243 bekanntes Spannfutter.

DE 739 348 C offenbart eine hydraulische Reibungskupplung zur drehfesten Verbindung einer Welle mit einem Gehäuse, mit einem Zahnrad, mit einer Riemenscheibe o.dgl.

US 2013/105255 A1 offenbart ein Gehäuse gegenüber dem über ein Lager ein Drehtisch drehbar gelagert ist. Der drehbare Tisch kann über eine Bremse festgesetzt werden.

US 3 486 776 A adressiert das Problem einer einfachen Austauschbarkeit von Walzen wie sie bei Druckerpressen verwendet werden. Dazu muss die Walze drehfest und zentriert auf einer Welle montiert werden. Zur Lösung dieses Problems hat die Walze Endscheiben, die eine axiale, radialsymmetrische und sich zur Walzenmitte gestuft verjüngende Ausnehmung haben unter Zwischenlage eines Kragens eine Welle eingeschoben wird. Der Kragen ist mit der Endscheibe fest verbunden und sitzt stramm auf der Welle, wobei er mit der Welle einen Hohlraum bildet. Durch eine explosionsartige chemische Reaktion in dem Hohlraum werden die Welle und der Kragen miteinander verbunden.

US 4 093 052 schlägt zur Lösung des auch in der US 3 486 776 A adressierten Problems eine Schaltkupplung vor, bei der ein zwischen der Welle und der Walze angeordneter Hohlring mit einem Druck beaufschlagt wird. Durch die Ausdehnung des Hohlrings werden die beiden drehfest zu verbindende Teile reibschlüssig miteinander verbunden. Als Anwendungsbeispiel wird die Befestigung einer Brecherwalze auf einer Antriebswelle beschrieben.

DE 33 22 007 beschreibt ein selbstausgleichendes Lager.

WO 2008/054294 A1 offenbart D7 eine Welle, auf der ein Kupplungsteil sitzt, mittels dem ein relativ zu der Welle drehbares Teil drehschlüssig mit der Welle verbunden werden kann. Die Kupplung besteht aus zwei Teilkupplungen, die unabhängig voneinander schaltbar sind. Die erste Teilkupplung verbindet die Welle mit einem Kupplungsträger und die zweite Teilkupplung den Kupplungsträger mit dem Teil. Zwischen den beiden Teilkupplungen ist ein Spalt um ein übersprechen der beiden Teilkupplungen aufeinander zu minimieren.

### Darstellung der Erfindung

Die Erfindung beruht auf der Beobachtung, dass das Prisma mit der Führungsnut sauber an das zu bearbeitende Werkzeug angelegt werden und in genau dieser Position fixiert werden muss. Zum Fixieren muss das Prisma eingespannt werden, dabei verändert sich bei den bekannten Spannvorrichtungen regelmäßig die Position oder Ausrichtung der Führungsnut.

Der Erfindung liegt die Aufgabe zugrunde, eine Spannvorrichtung insbesondere zum Fixieren einer Lünette zum Abstützen eines Werkstücks in einer Dreh- oder Schleifmaschine bereitzustellen, bei der die Lünette einfach präzise an das Werkstück angelegt werden und in der einmal gefundenen Position fixiert werden kann.

Diese Aufgabe wird durch eine Vorrichtung nach Anspruch 1 gelöst. Vorteilhafte Ausgestaltungen der Erfindung sind in den Unteransprüchen angegeben.

Die Spannvorrichtung hat vorzugsweise zumindest einen Träger mit einer vorzugsweise ringförmigen Gleitfläche. An der Gleitfläche liegt ein zur Gleitfläche konzentrisch angeordneter Ring an. Der Ring hat vorzugsweise einen beispielsweise in radialer Richtung verlaufenden Steg. Der Steg kann beispielsweise im Längsschnitt zumindest näherungsweise rechteckig, tonnenförmig, säulenförmig oder dgl. sein. "Längsschnitt" meint hier einen Schnitt durch die Längsachse des Rings. Beispielsweise an der der Gleitfläche zugewandten Seite des Stegs hat der Ring vorzugsweise einen Flügel. Der Begriff "Flügel" steht hier als anschauliches Synonym für einen an den Steg angesetzten Ansatz oder Fortsatz, mit einem vom Steg wegweisenden freien Ende. Der Flügel kann auch ringförmig sein und erinnert dann lediglich im Längsschnitt an eine Tragfläche, dient aber natürlich nicht zur Auftriebserzeugung.

Die der Gleitfläche des Trägers zugewandte Seite des Flügels ist komplementär zu der Gleitfläche geformt, so dass ein Gleitlager ausgebildet wird. Daher ist die Gleitfläche des Trägers zugewandte Seite des Flügels ebenfalls eine Gleitfläche. Die wenigstens zwei zueinander komplementären Gleitflächen bilden daher ein Gleitlager und sind jeweils Gleitlagerflächen. Die entsprechende gleitend anliegende Fläche des Flügels wird zur Unterscheidung gegenüber der Gleitfläche des Trägers nachfolgend als Lagerfläche bezeichnet. Ein Gegenlager umschließt auf der der Gleitfläche abgewandten Seite des Flügels mit dem Ring wenigstens einen Hohlraum für ein Fluid. Über einen mit dem Hohlraum kommunizierenden Fluidkanal kann ein Fluid in dem Hohlraum mit Druck beaufschlagt oder entspannt werden. Das Gegenlager nimmt dabei vorzugsweise die entsprechende Kraft auf bzw. leitet sie an anderer Stelle zumindest mittelbar in den Ring ein.

Der Hohlraum, genauer ein Fluid (z.B. ein Öl) in dem Hohlraum kann mit einem Druck (z.B. 200bar ± 100bar) beaufschlagt werden. Wird der Hohlraum mit einem Druck beaufschlagt, dann wird der Flügel etwas geweitet und gegen die Gleitfläche gepresst, d.h. mit ihr verspannt. Dadurch wird der Ring zuverlässig an dem Träger fixiert. Wird das Fluid entspannt, dann ist der Ring in der Gleitfläche beweglich.

Zum Einstellen der Lage einer mit dem Ring verbundenen Lünette wird der Druck des Fluids vorzugsweise so eingestellt, dass der Ring in der Gleitfläche mit einer Haftreibung gleitet, die zum Einstellen einer gewünschten Lage leicht zu überwinden ist und vorzugsweise gleichzeitig so bemessen ist, dass die Lünette in einer gewählten Lage zunächst verbleibt. Zunächst verbleibt meint, dass Lünette nicht durch die Schwerkraft aus der eingestellten Position und/oder Lage verstellt wird. Die Anlagefläche der Lünette kann auch (alternativ oder zusätzlich) mit einem Spannband oder dergleichen an einem abzustützenden Werkstück angebracht werden. Nachdem die gewünschte Lage eingestellt wurde, wird das Fluid in dem Hohlraum unter Druck gesetzt, wodurch die Reibung zwischen dem Ring und der Gleitfläche soweit erhöht wird, dass die bei der Bearbeitung des Werkstücks auf die Lünette wirkenden Kräfte zuverlässig in den Träger eingeleitet und dadurch abgefangen werden. Durch ein nicht völlig aber weitgehend entspanntes Fluid oder eine geringe Vorspannung des oder der Flügel kann die Position des Rings relativ zur Gleitfläche spielfrei festgelegt werden. Dennoch kann die Orientierung des Rings relativ zum Träger verändert werden. Natürlich kann auch die Passung zwischen dem Ring und dem Träger entsprechend präzise gefertigt sein. Als besonders geeignet hat sich eine Variante gezeigt, bei der Ring (bei vorzugsweise entspanntem Fluid) in die Gleitfläche eingeläppt wurde.

Sobald die gewünschte Lage des Rings und im Beispiel der Lünette gefunden ist, wird der Druck im Hohlraum erhöht und der Ring dadurch gegen die Gleitfläche verspannt und somit fixiert, ohne dass er seine Position oder Orientierung verändert. Das wird dadurch erreicht, dass der Druck, der auf die Flügel wirkt rotationsinvariant ist.

Vorzugsweise hat die Gleitfläche, also die Anlagefläche für den wenigstens einen Flügel im Querschnitt die Form von Kreissegmenten mit einem gemeinsamen Mittelpunkt. In anderen Worten, die Gleitfläche ist sphärisch um einen Mittelpunkt geformt. Vorzugsweise ist die Gleitfläche des Rings zumindest im Wesentlichen ebenfalls punktsymmetrisch zum Mittelpunkt der Kreissegmente. Die Gleitfläche(n) des Rings hat bzw. haben folglich die Form eines Kugelsegments. Natürlich können Abschnitte in der Gleitfläche zurückgesetzt sein. Wichtig ist lediglich, dass die aneinander anliegenden Flächen der Gleitfläche und des Rings, diesen bei einer Drehung des Rings um den Mittelpunkt führen. Dadurch kann ein durch Erhöhung des Drucks in dem Hohlraum festsetzbares Kugelgelenk realisiert werden.

Besonders bevorzugt hat der Steg an seiner, der Gleitfläche abgewandten Seite wenigstens einen flügelartigen Fortsatz, dessen der Gleitfläche abgewandte Seite an einer vorzugsweise zylindrischen Fläche eines Befestigungszapfens anliegt. Zwischen dem Gegenlager und der dem Befestigungszapfen abgewandten Seite des Fortsatzes ist vorzugsweise ein mit dem oder einem weiteren Fluidkanal kommunizierender weiterer Hohlraum. An dem Befestigungszapfen kann z.B. eine Lünette angeordnet sein. Durch eine Erhöhung des Drucks in dem weiteren Hohlraum kann der Befestigungszapfen, der nachfolgend auch kurz als 'Zapfen' bezeichnet wird, in dem Ring festgesetzt werden. Bei entspanntem Fluid ist eine Verschiebung des Zapfens entlang seiner Zapfenachse möglich. Ebenso kann der Zapfen um seine Zapfenachse gedreht werden (bei zylindrischer Anlagefläche für den wenigstens einen Fortsatz). Eine an dem Befestigungszapfen angeordnete Lünette kann durch eine Translation entlang der Zapfenachse als auch durch eine Rotation um den Mittelpunkt der Lagerschale verstellt werden. Es lässt sich folglich die Orientierung im Raum, als auch der Ort der Lünette in einem weiten Bereich zuverlässig einstellen.

Es gibt folglich vorzugsweise wenigstens einen (ersten) Hohlraum an der Lagerfläche abgewandten Seite des zumindest einen Flügels und wenigstens einen weiteren (zweiten) Hohlraum an der dem Flügel zugewandten Seite des wenigstens einen Fortsatzes. Diese Hohlräume können ein einer Ausführungsform miteinander kommunizieren, d.h. es ist ein Druckausgleich zwischen den beiden Hohlräumen möglich. Dann ist der Befestigungsbolzen entweder vollständig fixiert (Hohlraum unter erhöhtem Druck) oder bei entspannten Fluid gleichzeitig verschiebbar, um seine Längsachse rotierbar und auch noch schwenkbar. Alternativ ist der erste Hohlraum nicht kommunizierend mit dem weiteren Hohlraum verbunden. Nun kann man den Druck in dem ersten und dem weiteren Hohlraum unabhängig voneinander Einstellen und die Freiheitsgrade der Bewegung des Befestigungszapfens selektiv einschränken, in dem man den Druck in dem entsprechenden Hohlraum erhöht.

Der oder vorzugsweise die Fortsätze können gegen den Befestigungszapfen leicht vorgespannt sein, so dass eine Überwindung der Haftreibung leicht möglich ist, um den Zapfen relativ zum Ring zu bewegen, wobei der Zapfen spielfrei und zentriert in dem Ring aufgenommen wird. Alternativ kann natürlich auch die Passung entsprechend präzise sein oder das Fluid in dem Hohlraum etwas vorgespannt sein. Auch hier sind die entsprechenden Flächen vorzugsweise geläppt (vorzugsweise bei entspannter Fluid). Nachdem die korrekte Position und Orientierung eingestellt wurde, können die Hohlräume entweder nacheinander oder gleichzeitig mit Druck beaufschlagt werden, wodurch der Zapfen und somit eine daran befestigte Lünette zuverlässig relativ zum Träger fixiert wird, ohne während des Einspannens, also bei der Druckerhöhung die Lage oder den Ort relativ zum Träger zu verändern.

Vorzugsweise steht das Gegenlager seitlich über den Ring über und liegt mit wenigstens einer seitlich des Rings angeordneten Anlagefläche an dem Befestigungszapfen an. Besonders bevorzugt steht das Gegenlager beidseits über den Ring über und liegt beidseits des Rings an dem Zapfen an. Dadurch kann die Präzision weiter erhöht werden, weil die Flächen an denen der Zapfen anliegt wie eine Linearführung des Zapfens wirken. Alternativ kann die Führung auch ausschließlich durch die Fortsätze erfolgen, d.h. zwischen dem Gegenlager und der Mantelfläche des Befestigungszapfens ist dann ein Spalt. Dadurch wird die Montage der Spannvorrichtung erleichtert. Besonders einfach ist die Montage, wenn bei entspannten Hohlräumen der Ring und das Gegenlager schwimmend zueinander gelagert sind, z.B. durch wenigstens einen elastischen Dichtring ("O-Ring"), der wenigstens einen Ringspalt zwischen dem Ring und dem Gegenlager, und somit den entsprechenden Hohlraum abdichtet.

Vorzugsweise ist der Steg symmetrisch zum Symmetriepunkt der Gleitfläche angeordnet. Zudem können vorzugsweise beidseits des Stegs zwei symmetrische

Flügel angeordnet sein. Dadurch kann der Ring ohne Verluste in der Präzision besonders leicht sein.

Vorzugsweise hat der Querschnitt des wenigstens einen Flügels wenigstens eine Verjüngung. Die Verjüngung kann zwischen der Flügelwurzel und 2/3 der Flügellänge angeordnet sein. Die Verjüngung legt einen gedachten Ring fest, um den sich der Flügel bei einer Beaufschlagung des Fluides in dem Hohlraum mit Druck weitet.

Besonders bevorzugt ist der Hohlraum zwischen dem Flügel und dem Gegenlager im Bereich der größten Flügeldicke abgedichtet ist. Dadurch erfolgt die Abdichtung im Bereich der größten Steifigkeit und ist daher besonders gut. Zum Abdichten kann insbesondere ein Dichtring im Bereich der größten Flügeldicke zwischen dem Ring und dem Gegenlager angeordnet sein.

Eine besonders einfache Fertigung der Gleitfläche und auch eine einfache Montage des Rings in der Gleitfläche kann mit einer Gleitfläche aus wenigstens zwei gegeneinander verspannten Lagerhälften erreicht werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine isometrische Ansicht einer Spannvorrichtung,
Figur 2 zeigt eine Seitenansicht der Spannvorrichtung, und
Fig. 3 zeigt einen Längsschnitt durch die Spannvorrichtung
Fig. 4 zeigt eine weitere Anwendung der Spannvorrichtung.

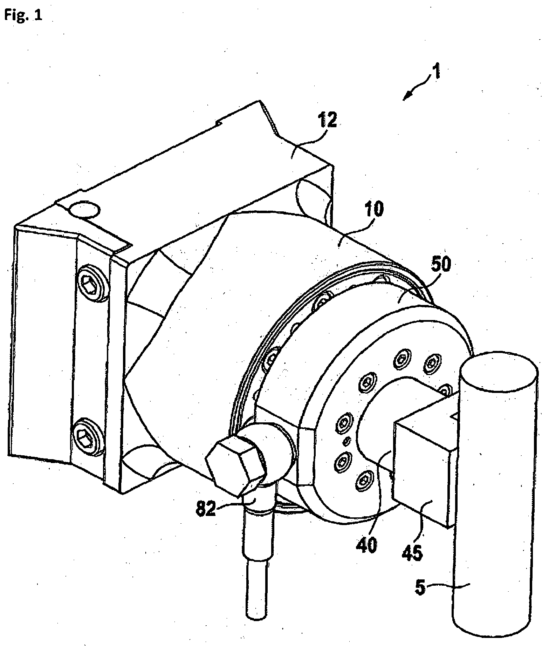

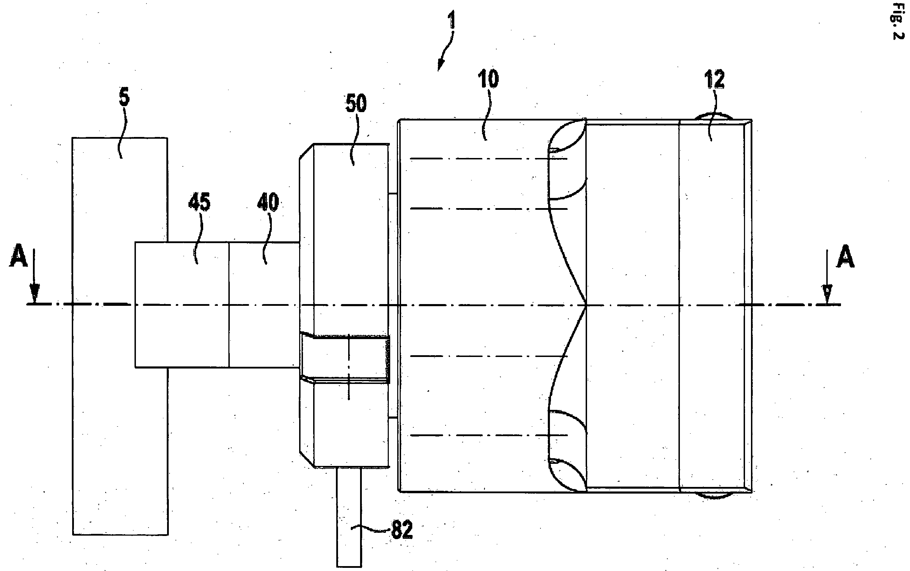

Figur 1 zeigt eine Spannvorrichtung 1 mit der ein Befestigungszapfen 40 für ein Prisma als Lünette bei der Bearbeitung von Werkstücken zusätzlich zur üblichen Einspannung in ein Spannfutter abgestützt werden kann. Die Spannvorrichtung 1 hat einen Träger 10, beispielsweise zu Befestigung der Spannvorrichtung an einer Werkzeugmaschine (vgl. auch Fig. 2).

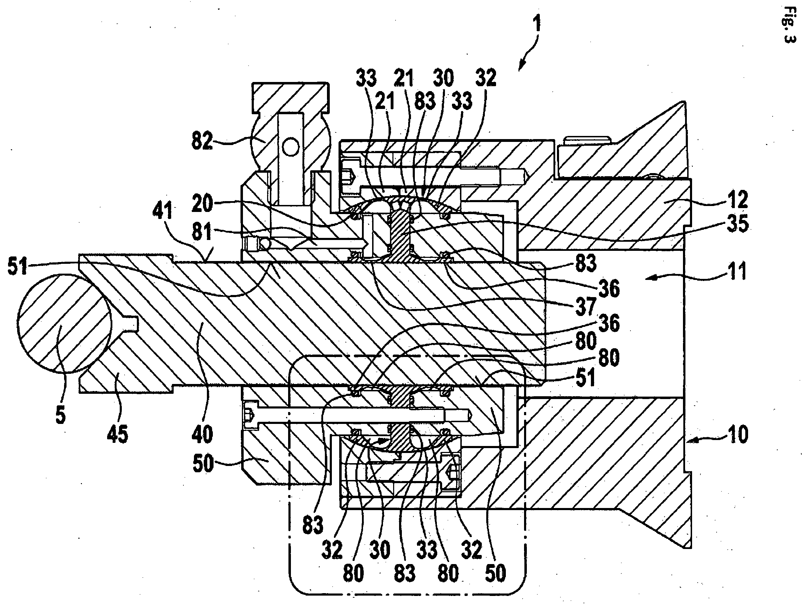

Wie in Figur 3 dargestellt kann der Träger vorzugsweise eine zumindest in etwa zylindrische Ausnehmung 11 mit gestuftem Innendurchmesser aufweisen. Die Stufung des Innendurchmessers ist nicht notwendig, erlaubt aber einen Sockel 12 auszubilden, der Stützkräfte nahezu verformungsfrei aufnimmt.

Auf der dem Sockel 12 abgewandten Seite des Trägers 10 sind in der Ausnehmung 11 zwei Lagerhalbschalen 21 fixiert (Fig. 3). Die beiden Lagerhalbschalen bilden eine Lagerschale mit einer sphärischen Gleit(lager)fläche 20. Diese Gleitfläche fläche dient als Gleitlager für einen Ring 30.

Der Ring 30 hat vorzugsweise einen Steg 35 an dessen der Gleitfläche 20 zugewandter Seite zumindest ein (dargestellt sind zwei) im Längsschnitt an Flügel erinnernde Ansätze 32 angesetzt sind (Fig. 3). Diese Ansätze werden vereinfachend als Flügel 32 bezeichnet. An der der Gleitfläche 20 abgewandten Seite sind an den Steg 35 ebenfalls im Längsschnitt an Flügel erinnernde Ansätze 36 angesetzt, die zur Unterscheidung als Fortsätze 36 bezeichnet werden.

Die Flügel 32 haben auf ihrer der Gleitfläche 20 zugewandten Seite vorzugsweise eine an die Gleitfläche 20 angepasste, d.h. zumindest abschnittsweise komplementäre Form, also wenigstens eine Lagerfläche, so dass der Ring 30 in der Gleitfläche 20 um den Mittelpunkt der im Schnitt kreissegmentförmigen Gleitfläche 20 geschwenkt werden kann. Ebenso kann der Ring vorzugsweise in der Lagerschale 21 rotieren. In beiden Fällen gleitet die Lagerfläche über die Gleitfläche 20.

Die an der der Gleitfläche 20 abgewandten Seite angeordneten Fortsätze 36 liegen an einer vorzugsweise zylindrischen Mantelfläche des Befestigungszapfens an und bilden mit der Mantelfläche ein weiteres Gleitlager.

Ein hier beispielhaft zweiteiliges Gegenlager 50 spannt den Steg 35 des Rings 30 beidseits ein, wobei auf der der Lagerfläche abgewandten Seite der Flügel 32 jeweils ein ringförmiger Hohlraum 80 gebildet wird.

Wie dargestellt (Fig. 3) umschließt das Gegenlager vorzugsweise auch zusammen mit wenigstens einem der Fortsätze 36 einen weiteren.ringförmigen Hohlraum 80 (dargestellt sind zwei Fortsätze 36, die je einen ringförmigen Hohlraum 80 mit dem Gegenlager umschließen.)

Zwischen dem Ring 30 und dem Gegenlager 50 sind elastische Dichtungen 83 angeordnet, um die Hohlräume 80 abzudichten. Natürlich kann die Abdichtung auch anders erfolgen z.B. durch Verlöten, Verschweißen etc.

Die Hohlräume 80 sind vorzugsweise durch entsprechende Fluidkanäle 81 miteinander und mit einem Fluidanschluss 82kommunizierend verbunden. Dadurch kann der Druck in den Hohlräumen 80 mit einer an den Fluidanschluss arischließbaren Pumpe eingestellt werden. Wird der Druck erhöht, werden die Flügel 32 und die Fortsätze 36 gegen die Gleitfläche 20 bzw. die Mantelfläche 41 des Befestigungszapfens 40 verspannt. Dadurch wird der Befestigungszapfen relativ zum Träger präzise fixiert, d.h. er ändert während des Fixierens weder seine Position noch seine Orientierung relativ zum Träger. Sobald das Fluid in dem Hohlräumen 80 entspannt wird, kann der Befestigungszapfen sowohl geschwenkt, um seine Längsachse rotiert als auch entlang seine Längsachse verschoben werden. Folglich kann bei entspanntem Fluid die Lünette einfach an das Werkstück 5 angelegt und anschließend durch eine Erhöhung des Drucks fixiert werden.

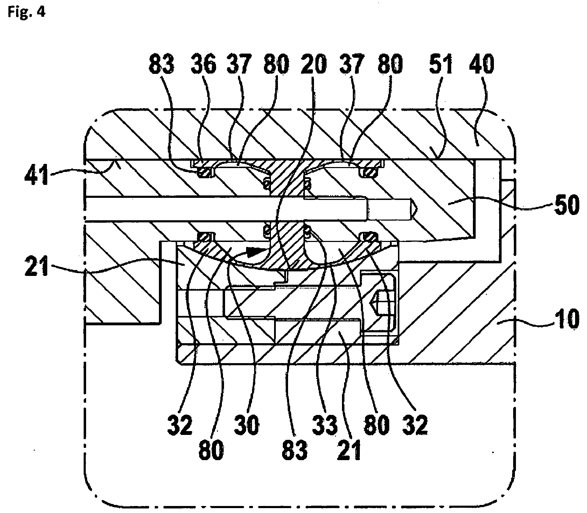

Eine andere Anwendung der Spannvorrichtung zeigt Figur 4: Auf einer Platte 400 sind mehrere Spannvorrichtungen (1) (dargestellt sind beispielhaft acht paarweise angeordnete Spannvorrichtungen 1) mit ihrem Träger fixiert. Der Aufbau der Spannvorrichtungen 1 entspricht im Wesentlichen des Anhand der Fig. 3 erläuterten. Anstelle einer Lünette sitzt am distalen Ende der Befestigungszapfen 40 je ein weiterer Ring 30, der mit einem Gegenlager in einem als Spannpratze 445 ausgebildeten Träger sitzt. Der Träger 10 und die Spannpratzen 445 lassen sich folglich im Abstand zueinander einstellen, wenn der Befestigungszapfen in axialer Richtung relativ zu einem der beiden Ringe verschoben wird. Zudem lässt sich der Befestigungszapfen relativ zum Träger 10 und damit zur Platte 400 schwenken und rotieren. In gleicher Weise kann die Spannpratze 445 relativ zum Befestigungszapfen eingestellt werden.

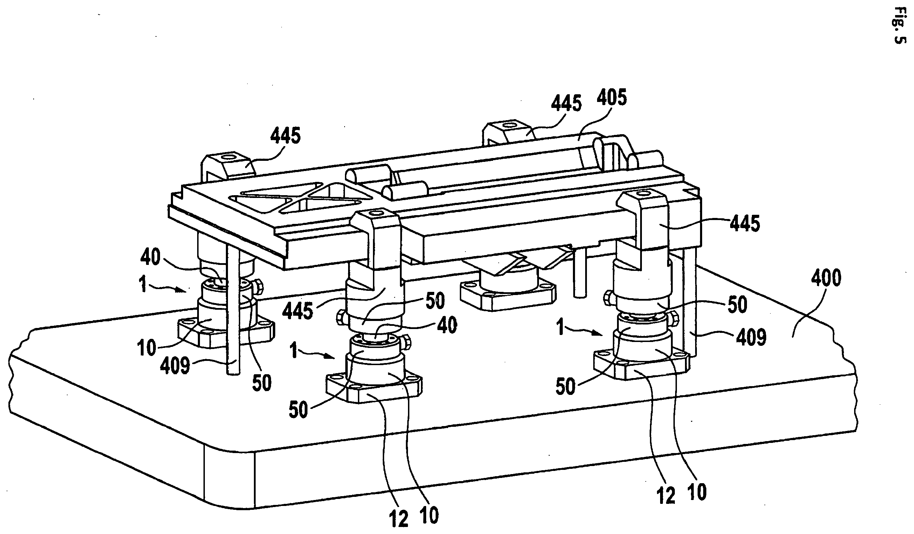

Verallgemeinert formuliert hat die Spannvorrichtung einen ersten Träger 10, mit einer ringförmigen Gleitfläche 20 (vgl. Fig. 3 und Fig. 4) sowie einen an der Gleitfläche 20 anliegenden ersten Ring 30 vorzugsweise mit einem in radialer Richtung verlaufenden Steg 35 an dessen einem Ende wenigstens ein Flügel 32 mit einer zur Gleitfläche (20) komplementären Lagerfläche angeordnet ist. Ein Gegenlager 50 umschließt mit zusammen mit dem ersten Ring 30 auf der der Gleitflächen 20 abgewandten Seite des Flügels 32 wenigstens einen Hohlraum 80 für ein Fluid umschließt. Über wenigstens einen ersten Fluidkanal 81, der mit dem Hohlraum 80 kommuniziert kann der Druck in dem Hohlraum eingestellt werden. Der Ring hat an seiner der Gleitfläche 20 abgewandten Seite wenigstens einen flügelartigen Fortsatz 36 hat, dessen der Gleitfläche 20 abgewandten Seite an einer zylindrischen Fläche eines Befestigungszapfens 40 anliegt. Zwischen dem Gegenlager 50 und der dem Befestigungszapfen 40 abgewandten Seite des Fortsatzes 36 ist wenigstens ein mit einem ggf. weiteren Fluidkanal 81 kommunizierender weiterer Hohlraum80. Soweit entspricht die Spannvorrichtung in Fig. 5 der in Fig. 3 gezeigten. Anders als in Fig. 3 sitzt nun nicht ein Stützprisma an dem Befestigungszapfen, sondern ein weiterer Ring 30, der ebenso wenigstens einen flügelartigen Fortsatz 36 hat, mit dem er den Befestigungszapfen umschließt. Zudem hat der Ring auf seiner dem Befestigungszapfen abgewandten Seite Flügel 32, die an einer Gleitlagerfläche eines weiteren Trägers anliegen. Der weitere Träger hat in Fig. 5 beispielhaft die Form einer Spannpratze bzw. eines Teils davon. Auf dem weiteren Ring 30 sitzt genauso wie in Fig. 3 ein weiteres Gegenlager 50, dass mit den Flügeln 32 und den Fortsätzen 36 jeweils Hohlräume 80 bildet.

Verkürzt zusammengefasst, sitzen zwei Spannvorrichtungen z.B. nach Fig. 3 auf einem gemeinsamen Befestigungzapfen 40.

Die Spannpratzen 445 haltern gemeinsam ein Werkstück 405, das z. B. ein durch Fräsen nachzubearbeitendes Gussteil sein kann. Zum Einspannen des Werkstücks 405 wird das Fluid zunächst entspannt und die Spannpratzen 445 können an das Werkstück 405 angelegt werden, ohne es in sich zu verspannen. Der Abstand der Spannpratzen 445 zur Platte ist ebenso einstellbar, wie der Winkel an dem die jeweilige Spannpratze 445 angreift. Um eine gewünschte Lage des Werkstücks 405 zu erreichen kann es bei entspannten Spannvorrichtungen z.B. auf drei Stäbe 409 gestellt werden. Nun werden die Spannpratzen 445 an das Werkstück angelegt und geschlossen, d.h. das Werkstück sitzt nun fest in der jeweiligen Spannpratze 445. Die Position und Ausrichtung des Werkstücks 405 relativ zur Platte 400 kann nun eingestellt werden, weil bei entspannten Hohlräumen die Befestigungszapfen 40 relativ zur Platte 400 und zu dem Spannpratzen 445 schwenkbar, drehbar und axial verschiebbar sind. Sind die gewünschte Position und Ausrichtung erreicht, wird vor der Bearbeitung des Werkstücks das Fluid in den Hohlräumen 80 (vgl. Fig. 3) unter Druck gesetzt und somit das Werkstück in einer gewünschten Position spannungsfrei und präzise fixiert. Bei der spanenden Bearbeitung werden Spannungen frei, so dass das Werkstück sich in sich verzieht. Dann genügt es die Hohlräume 80 zumindest einer Spannvorrichtung (möglich auch aller oder nur eines Teil der Spannvorrichtungen) kurzzeitig zu entspannen und den bzw. die Befestigungszapfen anschließend wieder festzusetzen, um das Werkstück spannungsfrei zu lagern.

### Bezugszeichenliste

- 5: Werkstück
- 10: Träger
- 11: Ausnehmung (im Beispiel gestuft zylindrisch)
- 12: Sockel
- 20: Gleitfläche / Gleitlagerfläche
- 21: Halbschale
- 30: Ring
- 32: Ansatz, Flügel
- 33: Verjüngung
- 35: Steg
- 36: Fortsatz
- 37: Verjüngung
- 40: Zapfen / Befestigungszapfen
- 41: Mantelfläche
- 45: Stützprisma (Lünette)
- 50: Gegenlager
- 51: Anlagefläche
- 80: Hohlraum
- 81: Fluidkanal
- 82: Fluidanschluss
- 83: Dichtung / Dichtungsring
- 400: Platte
- 405: Werkstück
- 409: Stange

## Patentansprüche

1. Spannvorrichtung (1) insbesondere zum Fixieren einer Lünette (45), zumindest aufweisend:
- einen Träger (10) mit einer ringförmigen Gleitfläche (20),
- einen an der der Gleitfläche (20) anliegenden Ring (30) mit einem in radialer Richtung verlaufenden Steg (35) an dessen einem Ende wenigstens ein Ansatz (32) mit einer zur Gleitfläche (20) komplementären Lagerfläche angeordnet ist, wobei die Gleitfläche (20) und die Lagerfläche ein Gleitlager ausbilden.
- ein Gegenlager (50), das auf der der Gleitfläche (20) abgewandten Seite des Ansatzes (32) mit dem Ring (30) wenigstens einen Hohlraum (80) für ein Fluid umschließt,
- wenigstens einen Fluidkanal (81), der mit dem Hohlraum (80) kommuniziert, um über den Fluidkanal (31) den Fluiddruck zu verändern.

2. Spannvorrichtung (1) nach Anspruch 1,
**dadurch gekennzeichnet, dass**
die Gleitfläche (20) des Trägers Im Längsschnitt die Form von Kreissegmenten hat, so dass die Menge aller Kreismittelpunkte einen orthogonal zur Schnittebene liegenden Kreis bildet.

3. Spannvorrichtung (1) nach Anspruch 1,
**dadurch gekennzeichnet, dass**
die Gleitfläche (20) sphärisch um einen Mittelpunkt geformt ist.

4. Spannvorrichtung (1) nach einem der vorstehenden Ansprüche,
**dadurch gekennzeichnet, dass**
der Steg (35) an seiner der Gleitfläche (20) abgewandten Seite wenigstens einen flügelartigen Fortsatz (36) hat, dessen der Gleitfläche (20) abgewandten Seite an einer zylindrischen Fläche eines Befestigungszapfens (40) anliegt, und dass
zwischen dem Gegenlager (50) und der dem Befestigungszapfen (40) abgewandten Seite des Fortsatzes (36) ein mit einem Fluidkanal (81) kommunizierender Hohlraum (80) ist.

5. Spannvorrichtung nach Anspruch 4
**dadurch gekennzeichnet dass**
das Gegenlager (50) seitlich über den Ring (30) übersteht und mit wenigstens einer seitlich des Rings (30) angeordneten Anlagefläche (51) an dem Befestigungszapfen (40) anliegt.

6. Spannvorrichtung (1) nach einem der vorstehenden Ansprüche
**dadurch gekennzeichnet dass**
der Steg (35) symmetrisch zum Symmetriepunkt der Gleitfläche (20) angeordnet ist und beidseits des Stegs zwei symmetrische Ansätze (32) angeordnet sind.

7. Spannvorrichtung (1) nach einem der vorstehenden Ansprüche
**dadurch gekennzeichnet dass**
der wenigstens eine Ansatz (32) wenigstens eine Verjüngung hat, die zwischen der Flügelwurzel und 2/3 der Flügellänge angeordnet ist.

8. Spannvorrichtung (1) nach einem der vorstehenden Ansprüche,
**dadurch gekennzeichnet dass**
der Hohlraum (80) zwischen dem Ansatz (32) und dem Gegenlager (50) im Bereich der größten Flügeldicke abgedichtet ist.

9. Spannvorrichtung (1)nach einem der vorstehenden Ansprüche
**dadurch gekennzeichnet dass**
die Gleitfläche (20) durch wenigstens zwei Lagerhälften (21) gebildet wird, die eine Lagerschale bilden.

## Claims

1. Clamping device (1) particularly for fixing a steady rest (45), at least comprising:
- a support 10 with an ring-shaped sliding surface (20),
- a ring (30) abutting the sliding surface (20) with a bar (35) extending in radial direction, wherein at least one shoulder (32) is arranged at one end of said bar with a bearing surface being complementary to the sliding surface (20), wherein the sliding surface (20) and the bearing surface form a slide bearing,
- a counter bearing (50) which encloses together with the ring (30) a cavity (80) for a fluid, said cavity being located on the side of the shoulder (32) which faces away from the sliding surface (20),
- at least one fluid channel (81) being in fluid communication with the cavity (80) to modify the fluid pressure via the fluid channel (31).

2. Clamping device (1) according to claim 1,
**characterized in that**
the longitudinal section of the sliding surface (20) of the support has the shape of circle segments, such that the set of all circle center points form a circle oriented orthogonally to the cutting plane.

3. Clamping device (1) according to claim 1,
**characterized in that**
the sliding surface (20) is formed spherically around a center point.

4. Clamping device (1) according to one of the preceding claims,
**characterized in that**
the bar (35) has at least one wing-shaped protrusion (36) at its side facing away from the sliding surface (20), which side facing away from the sliding surface (20) abuts to a cylindrical surface of a mounting pin (40), and that
a cavity (80) is located between the counter bearing (50) and the side of the protrusion (36) facing away from the mounting pin (40), which cavity is in fluid communication with a fluid channel (81).

5. Clamping device according to claim 4,
**characterized in that**
the counter bearing (50) protrudes laterally beyond the ring (30) and abuts against the mounting pin (40) with at least one abutment surface (51) being located laterally to the ring (30).

6. Clamping device (1) according to one of the preceding claims,
**characterized in that**
the bar (35) is arranged symmetrically with respect to the symmetry point of the sliding surface (20), and two symmetrical shoulders (32) are arranged on both sides of the bar.

7. Clamping device (1) according to one of the preceding claims,
**characterized in that**
the at least one shoulder (32) has at least one taper being arranged between the wing's root and 2/3 of the wing's length.

8. Clamping device (1) according to one of the preceding claims,
**characterized in that**
the cavity (80) between the shoulder (32) and the counter-bearing (50) is sealed in the section having the largest wing thickness.

9. Clamping device according to one of the preceding claims,
**characterized in that**
the sliding surface (20) is formed by at least two bearing halves (21) which form a bearing shell.

## Revendications

1. Dispositif de serrage (1), en particulier pour la fixation d'une lunette (45), comprenant au moins :
- un support (10) avec une surface de glissement annulaire (20),
- une bague (30) reposant sur la surface de glissement (20) avec une barrette (35) orientée dans le sens radial dont une extrémité porte au moins un épaulement (32) avec une portée de palier complémentaire de la surface de glissement (20), la surface de glissement (20) et la portée de palier formant un palier de glissement ;
- une butée de palier (50) qui délimite avec la bague (30), sur le côté de l'épaulement (32) tourné à l'opposé de la surface de glissement (20), au moins une cavité (80) pour un fluide ;
- au moins un canal de fluide (81) communiquant avec la cavité (80) pour modifier la pression de fluide passant par le canal de fluide (31).

2. Dispositif de serrage (1) selon la revendication 1, **caractérisé en ce que** la surface de glissement (20) du support a la forme de segments de cercle en coupe longitudinale, de sorte que l'ensemble de tous les centres des cercles forme un cercle perpendiculaire au plan de coupe.

3. Dispositif de serrage (1) selon la revendication 1, **caractérisé en ce que** la surface de glissement (20) a une forme sphérique autour d'un point central.

4. Dispositif de serrage (1) selon l'une des revendications précédentes, **caractérisé en ce que** la barrette (35) possède sur son côté tourné à l'opposé de la surface de glissement (20) au moins une saillie en forme d'ailette (36) dont le côté tourné à l'opposé de la surface de glissement (20) repose sur une surface cylindrique d'un goujon de fixation (40) et
**en ce qu'**il est prévu entre la butée de palier (50) et la face de la saillie (36) tournée à l'opposé du goujon de fixation (40) une cavité (80) communiquant avec un canal de fluide (81).

5. Dispositif de serrage selon la revendication 4, **caractérisé en ce que** la butée de palier (50) dépasse latéralement au-delà de la bague (30) et repose sur le goujon de fixation (40) avec au moins une surface d'appui (51) disposée sur le côté de la bague (30).

6. Dispositif de serrage (1) selon l'une des revendications précédentes, **caractérisé en ce que** la barrette (35) est disposée de façon symétrique par rapport au point de symétrie de la surface de glissement (20) et deux épaulements symétriques (32) sont disposés à deux côtés de la barrette.

7. Dispositif de serrage (1) selon l'une des revendications précédentes, **caractérisé en ce que** l'au moins un épaulement (32) présente au moins un resserrement qui est disposé entre la racine de l'ailette et les 2/3 de la longueur de l'ailette.

8. Dispositif de serrage (1) selon l'une des revendications précédentes, **caractérisé en ce que** la cavité (80) est rendue étanche entre l'épaulement (32) et la butée de palier (50) dans la zone de plus grande épaisseur de l'ailette.

9. Dispositif de serrage selon l'une des revendications précédentes, **caractérisé en ce que** la surface de glissement (20) est formée par au moins deux moitiés de palier (21) qui forment une coquille de palier.
